# EUROPEAN PATENT APPLICATION

(11) **EP 1 621 853 A1**
(43) Date of publication of application: **01.02.2006**
(21) Application number: 05254434.3
(22) Date of filing: 15.07.2005
(51) Int. Cl.: G01D 5/48

(54) **Limited travel position magnet**

(30) Priority: 28.07.2004 US 900859
(71) Applicant: MTS SYSTEMS CORPORATION, Eden Prairie, MN 55344-2290 (US)
(72) Inventor: Nyce, David S., Apex, 27502 North Carolina (US)
(74) Representative: Pluckrose, Anthony William

(57) **Abstract**

A travel limit arrangement is disclosed that limits the travel of a magnet which indicates position in a magnetostrictive detector. A mechanical limit arrangement for use with a plunger (2) reciprocating in a cylinder (3), comprises:
a magnet assembly (1), said magnet assembly reciprocally mounted in the cylinder and reciprocates with respect to the piston a spring member;
a limit stop, said spring member (7) being mounted around a portion of said plunger and said magnet (1) being mounted between said limit stop and said spring member;
a magnet stop (8), said magnet stop reciprocating said magnet with said spring member in the dead zone of the plunger with respect to the cylinder.

## Description

### BACKGROUND OF THE INVENTION

### FIELD OF THE INVENTION

The present invention relates to position sensors and more particularly to position sensors that use magnetostrictive tranducers to measure position in a cylinder.

### DESCRIPTION OF THE ART

Magnetostrictive transducers having elongated waveguides that carry torsional strain waves induced in the waveguide when current pulses are applied along the waveguide through a magnetic field are well lmown in the art. A typical linear distance measuring device using a movable magnet that interacts with the waveguide when current pulses are provided along the waveguide is shown in U.S. Patent No. 3,898,555.

Devices of the prior art of the sort shown in U.S. Patent No. 3,898,555 also have the sensor element in a housing which also houses the electronics to at least generate the pulse and receive the return signal. The amplitude of the return signal detected from the acoustical strain pulse is, as well known in the art, affected by many parameters- These parameters include the position magnet strength, waveguide quality, temperature, waveguide interrogation current, and assembly tolerances.

When applying a position sensor to a cylinder, it is preferred that the overall length of the cylinder/sensor assembly be minimized as much as possible to reduce the space needed to accommodate the cylinder/sensor assembly. A sensor for this application will normally sense the location of a position magnet attached within the cylinder. This type of sensor, a magnetostrictive sensor for example, has an operating region over which normal measurement signals are produced. It also has regions near each end, called dead zones, over which the detection of the position magnet is not reliable. Under extreme vehicle conditions, such as when the vehicle utilizing the cylinder/sensor assembly rides over a bump which exceeds design limits of the vehicle suspension system, previous designs could allow the sensor to operate in the dead zones thereby producing unusable readings from the sensor.

It is an object of the present invention to limit the travel of position magnet so that it remains within the operating range of the sensor, even when the measured part of the cylinder moves into the dead zones.

It is a further object of the present invention that the sensor continues to indicate that the position magnet is near the limit of the operating range when the measured part of the cylinder is near the limit of the operating range or in the adjacent dead zone.

### SUMMARY OF THE INVENTION

The present invention shows a way to limit the travel of the position magnet so that it remains within the operating range of the sensor, even when the measured part of the cylinder moves into the dead zones. It is important that the sensor continues to indicate that the position magnet is near the limit of the operating range when the measured part of the cylinder is near the limit of the operating range or in the adjacent dead zone.

A sensor which senses the location of a position magnet relative to it may be configured to indicate the position of a moving member with respect to a stationary member. The sensor is attached to one of these members, and the position magnet is attached to the other member. The present invention provides a mechanical arrangement of the position magnet together with a spring member, a magnet stop, and a limit stop. If the system is a cylinder, one arrangement is to attach the sensor to the cylinder wall and to attach the position magnet so that it moves with the plunger.

In the present invention for use with a vehicle cylinder the position magnet is held against a magnet stop feature of the plunger by spring pressure, so that it accurately follows the plunger position while the position magnet is within the operating range of the sensor. A limit stop feature of the cylinder is referenced to the operating range of the sensor and includes a shelf capable of stopping movement of the position magnet into the dead zones of the sensor. While the carrier stop is traveling within the dead zones, the position magnet is held against the limit stop under spring pressure. When the magnet stop is later re-aligned with the operating range, the position magnet is either picked up by the magnet stop and will continue to follow the motion with the magnet stop or assumes a fixed position relative to the plunger and senses the plunger movement with respect to it and the magnet stop. The result of this arrangement is to allow the sensor to be sized only for the normal operating range. When the plunger goes out of the normal range, the position magnet stays in the operating range of the sensor and the sensor continues to indicate a position at the edge of the operating range.

### BRIEF DESCRIPTION OF THE DRAWINGS

For a further understanding of the nature and objects of the present invention, reference should be had to the follawing figures in which like parts are given like reference numerals and wherein:
Figure 1 shows two views, a normal view Figure 1a and a bottomed view Figure 1b of the first preferred embodiment of the present invention and wherein the magnet is mounted on the plunger and the sensor is stationary in the cylinder wall and an O-ring is mounted in the head of a cylinder to isolate fluid and prevent impurities; and
Figure 2 shows a second preferred embodiment of the invention with Figure 2a being a normal view and Figure 2b being a stopped view and wherein the magnet is stationary in the cylinder wall and the sensor is in the plunger; and
Figure 3 shows a third preferred embodiment of the invention which is similar to Figure 2 but has the plunger activated inverted from that of Figure 2; and

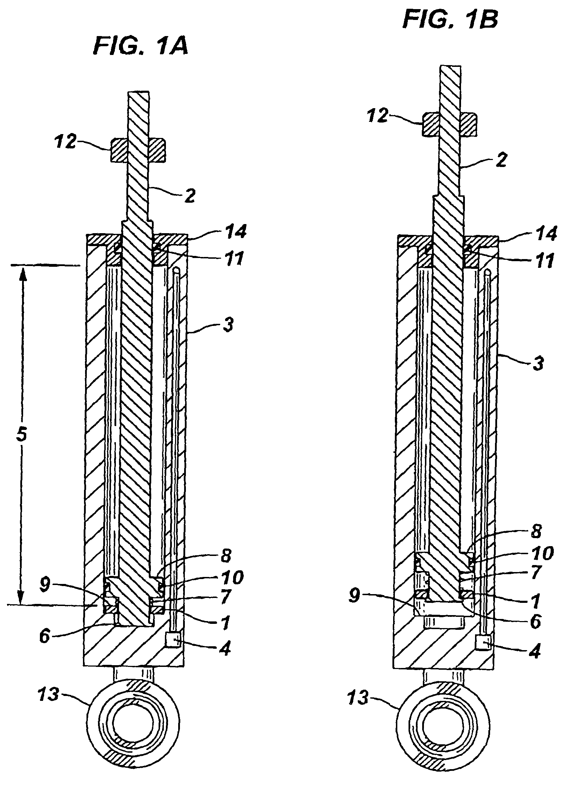

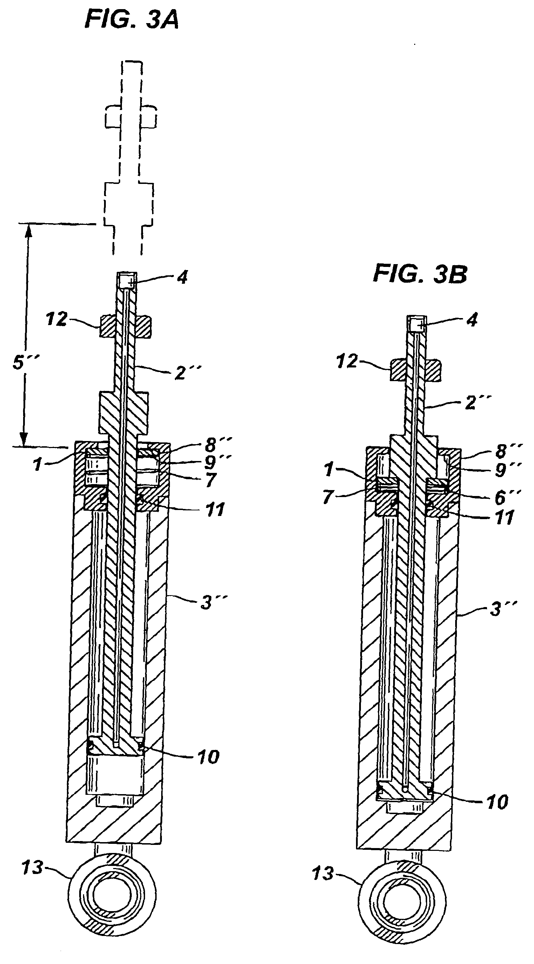

Figures 1 and 3 are similar except that sensor is in rod in Figure 3 versus in cylinder wall in Figure 1; and

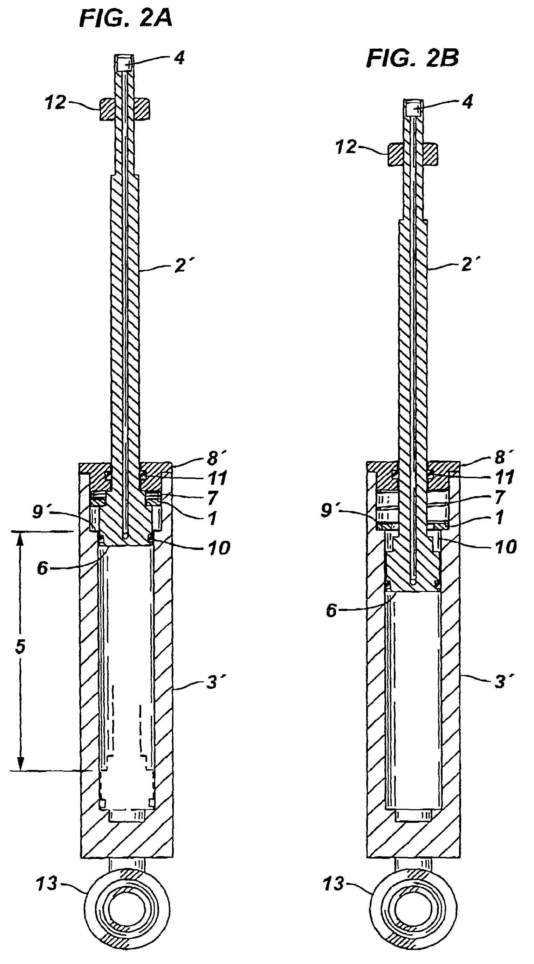

Figures 2 and 3 both have sensor in rod, but Figure 2 pushes magnet up whereas Figure 3 pushes magnet down-

### DESCRIPTION OF THE PREFERRED EMBODIMENTS

Figure 1 shows a plunger 2 reciprocally mounted in a cylinder 3. As shown in Figure 1 the plunger 2 moves vertically within cylinder 3- A sensor 4 is mounted in the wall of cylinder 3 and is juxtaposed with a position magnet 1 mounted on the plunger 2. As shown in the preferred embodiment, the sensor 4 is magnetostrictive in nature although other types of sensors could be used but are not preferred. The sensor 4 and the magnet 1 are placed with regard to each other such that there is a range 5 of normal operation in which the magnet 1 may traverse from one end of the cylinder 3 to the other end of cylinder 3. Magnet 1 is mounted on the plunger, which is preferably circular in cross-section with the magnet 1 mounted on its outer circumference. Magnet 1 is held on one side by a lower magnet stop 6 and is biased against lower magnet stop 6 by a magnet spring 7 which abuts one side of magnet 1. The other end of magnet spring 7 is supported by a magnet spring stop 8.

A shoulder 9 is also formed in the bore of cylinder 3 which is sized to receive lower magnet stop 6 within the innerbore of shoulder 9 and to abut the side of magnet 1 opposite to the side that is impinged upon by spring 7. Magnet 1 is not affixed to plunger 2. Accordingly, magnet 1 will reciprocate in the enclosure that holds spring 7 and as shown in Figure 1b when magnet 1 abuts shoulder 9, spring 7 is compressed as plunger 2 travel exceeds the range 5 of sensor 3.

The magnet sring stop 8 has a detent in which is mounted a seal 10 to prevent a leakage of fluids into the space where magnet 1 is located.

Therefore, for Figure 1, the position magnet 1 moves with plunger 2, while plunger 2 moves within cylinder 3. Sensor 4 senses the position of position magnet 1 within the operating range 5 of sensor 4. Position magnet 1 is held against the lower magnet stop 6 feature of plunger 2 by magnet spring 7. The other end of magnet spring 7 is supported by magnet spring stop 8. Ifplunger2 moves below the operating range 5 of sensor 4, then lower limit stop or shoulder 9 feature of cylinder 3 prevents position magnet 1 from going below operating range 5 of sensor 4. Components 12 and 13 are examples of means for mounting the cylinder into the application.

Figure 2 has the same components 1-9 as Figure 1 except that they are positioned differently. In Figure 2, the magnet 1 is pressed against shoulder 9 by spring 7 and sensor 4 is located in the interior of plunger 2'. In Figure 2a with the normal range, the plunger 2' is configured differently than the plunger 2 of Figure 1. As with Figure 1, an O-ring 10 is located at one end of plunger 2' and a second O-ring 11 is mounted in the end cap 14 of cylinder 3 to isolate fluid and to prevent impurities.

Unlike Figure 1, because the magnet 1 is now located at the other end of the cylinder 3, spring 7 still rests on the same side of magnet 1 as in Figure 1; however, the other end of the spring 7 abuts the top plunger flange 8 which acts as a magnetic spring stop 8 but now at the upper end instead of the lower end of the cylinder 3 and hence has given number 8'.

Accordingly, in Figure 2 the stops operate to limit travel in an additional direction so that the position magnet 1 is maintained inside of the sensor operating range 5 in both directions of travel. When plunger 2 moves up so that sensor 4 is above the alignment with position magnet 1 for operating range 5, the top edge of magnet stop 6 lifts position magnet 1 away from shoulder 9, compressing spring 7 against flange 8 thereby keeping position magnet 1 from aligning within the dead space of sensor 4.

In Figure 2b if the plunger of 2' bottoms as shown in phantom line, the magnet is stationary at the position of shoulder 9' as in Figure 2a and thus does not move outside of the normal range 5 so long as the cylinder 3 is properly sized.

Another approach which permits the magnet to be affixed at a fixed length adjacent to cylinder 3 is to provide a magnetic spring stop 8" which is affixed to the shoulder similar to that of Figure 2 for shoulder 9' at the end of cylinder 3. An inverted shoulder 9" now acts as an upper limit stop as shown in Figure 3 a and permits the magnet 1 to be biased by spring 7 against upper magnet limit stop 9" with the other end of the spring 7 abutting a magnet spring stop 8" at its other end. The magnet is not affixed to but is contained by magnet spring stop 8", thereby giving the lower range 5" The upper range of 5" occurs when, as in Figure 3a, the plunger 2 is at its elevated position. Below the lower end of the range 5", lower magnet stop 6" is formed as part of the plunger 2" to force magnet 1 to compress spring 7 as it bottoms out in Figure 3b.

Accordingly, the position magnet 1 does not move but the sensor 4 does move with the plunger 2", while plunger 2" moves within cylinder 3". Sensor 4 senses the position of position magnet 1 within the operating range 5 of sensor 4 as sensor 4 passes position magnet 1. Position magnet 1 is held against upper limit stop 9" feature of cylinder 3" by magnet spring 7. The other end of magnet spring 7 is supported by magnet spring stop 8". If plunger 2" moves below the operating range 5" of sensor 4, then upper limit stop or shoulder 9" feature of cylinder 3" ceases to support magnet 7 as upper magnet stop 6" forces magnet 7 to reciprocate at the upper end of magnet spring stop 8" compressing spring 7 and preventing the position magnet 1 from going far below operating range 5" of sensor 4.

Figures 1 and 3 are similar except that the sensor is in the rod in Fig. 3 versus in the cylinder wall in Figure 1 . Figures 2 and 3 both have sensor in the rod, but Figure 2 pushes the magnet up whereas Figure 3 pushes magnet down.

## Claims

1. A mechanical limit arrangement for use with a plunger reciprocating in a cylinder, comprising:
a magnet assembly, said magnet assembly reciprocally mounted in the cylinder and reciprocating with respect to a piston;
a spring member;
a limit stop, said spring member being mounted around a portion of said plunger and said magnet being mounted between said limit stop and said spring member; and
a magnet stop, said magnet stop reciprocating said magnet with said spring member in a dead zone of the plunger with respect to the cylinder.

2. The limit arrangement of Claim 1, wherein a sensor is included, said sensor used to monitor the position of the magnet assembly relative to the plunger and said limit stop is referenced to the operating range of said sensor.

3. The limit arrangement of Claim 1, wherein the plunger moves relative to said magnet assembly.

4. The limit arrangement of Claim 1, wherein said magnet moves relative to the cylinder.

5. The limit arrangement of Claim 1, wherein said limit stop stops movement of the magnet assembly into the dead zone.

6. The limit arrangement of Claim 1, wherein there is further included a seal, said seal being mounted in the head of the cylinder.

7. The limit arrangement of Claim 1, wherein there is included a sensor mounted in the cylinder and juxtaposed with the magnet assembly.

8. The limit arrangement of Claim 7, wherein the sensor is magnetostrictive.

9. The limit arrangement of Claim 1, wherein there is included a sensor mounted in the piston and juxtaposed with the magnet assembly.

10. The limit arrangement of Claim 9, wherein the sensor is magnetostrictive.

11. The limit arrangement of Claim 1, wherein the plunger is circular in cross-section.
